# EUROPÄISCHE PATENTANMELDUNG

(11) **EP 3 045 410 A1**
(43) Veröffentlichungstag der Anmeldung: **20.07.2016**
(21) Anmeldenummer: 16150849.4
(22) Anmeldetag: 12.01.2016
(51) Int. Cl.: B65G 47/248

(54) **VORRICHTUNG UND VERFAHREN ZUM WENDEN UND TRANSPORTIEREN VON STÜCKGUT**

(30) Priorität: 13.01.2015 DE 202015100131 U
(71) Anmelder: Trans - Tech, Hysek GmbH, 86438 Kissing (DE)
(72) Erfinder: MEISETSCHLÄGER, Andreas, 86510 Ried (DE); LUTZ, Mario, 86510 Ried (DE)
(74) Vertreter: Charrier Rapp & Liebau

(57) **Zusammenfassung**

Die Erfindung betrifft eine Vorrichtung zum Transportieren und Wenden von Stückgut, mit wenigstens einer Wendeeinrichtung (1) mit einem Führungskanal (2), in welchem die seriell zugeführten Stückgüter in einer ersten Lage eingeführt und unter Veränderung ihrer Lage in einer Transportrichtung (T) durchgeführt werden, und mit einer sich in Transportrichtung (T) an die Wendeeinrichtung (1) anschließenden Transporteinrichtung (21) mit einem Transportkanal (22), in dem die Stückgüter in ihrer zweiten Lage linear weiter transportiert werden. Um mit der Vorrichtung ohne Umrüstung unterschiedliche Stückgüter verarbeiten zu können, ist nach der Erfindung vorgesehen, dass die Form und/oder der Durchmesser des Führungskanals (2) sowie die Form und/oder der Durchmesser des Transportkanals (22) aneinander anpassbar sind.

## Beschreibung

Die Erfindung betrifft eine Vorrichtung zum Wenden und Transportieren von Stückgut nach dem Oberbegriff des Anspruchs 1 sowie ein Verfahren zum Transportieren und Wenden von Stückgut nach dem Oberbegriff des Anspruchs 14.

Eine Wendevorrichtung zum Wenden von Stückgut ist aus der EP 0 070 195 B1 bekannt. Diese Wendevorrichtung umfasst einen Führungsblock, der aus mehreren, aneinander liegenden oder im Abstand zueinander angeordneten Platten zusammengesetzt ist. Jede Platte weißt dabei eine Ausnehmung auf, welche zumindest im Wesentlichen der Form der Stückgüter angepasst ist, welche mit der Wendevorrichtung gewendet werden sollen. Die Platten sind dabei so zueinander angeordnet, dass sich ein Führungskanal in dem durch die Platten gebildeten Führungsblock ausbildet, wobei die in einer Durchlaufrichtung des Stückguts hintereinander angeordneten Platten und die darin ausgebildeten Ausnehmungen so ausgerichtet sind, dass sich entlang einer Bewegungsbahn der zu wendenden Stückgüter Hindernisse in dem Führungskanal ausbilden. Diese Hindernisse drehen ein durch den Führungskanal geführtes Stückgut jeweils geringfügig um eine durch das Stückgut durchgehende und zu seiner Bewegungsrichtung parallele Achse, so dass das Stückgut beim Durchlauf durch den Führungskanal von einer ersten Lage am Eingang des Führungskanals in eine zweite Lage am Ende des Führungskanals gedreht wird.

Derartige Wendevorrichtungen können bspw. zum Wenden von Verpackungen in der Form von zylindrischen Dosen, Gläsern oder Flaschen oder quaderförmigen Kartonverpackungen eingesetzt werden. Häufig werden solche Wendevorrichtungen zusammen mit Transportvorrichtungen zum (linearen) Weitertransport der Stückgüter eingesetzt. So sind aus dem Stand der Technik z.B. kombinierte Vorrichtungen zum Wenden und Transportieren von Behältern wie Dosen, Gläsern oder Flaschen bekannt, welche bspw. in Reinigungsvorrichtungen (sog. "Rinsern") eingesetzt werden, in denen die Behälter zunächst in eine Kopfüber-Stellung gedreht werden, in der sich die Öffnung der Behälter in einer 135°-oder 180°-Stellung befindet, in der dann anschließend eine Reinigungslösung in den Behältern eingesprüht werden kann, um diese zu reinigen. Die Behälter werden dabei zunächst mit einer Wendevorrichtung in die Kopfüber-Stellung gedreht und anschließend mit einer Transportvorrichtung längs eines Transportkanals zu und durch eine Reinigungsvorrichtung (linear) transportiert, in der die Reinigungslösung in die gedrehten Behälter gesprüht wird.

Nachteilig bei den bekannten kombinierten Wende- und Transportvorrichtung ist eine fest vorgegebene Größe des Führungskanals der Wendevorrichtung und des Transportkanals der Transportvorrichtung. In der eingangs beschriebenen Wendevorrichtung ist bspw. die Form und die Größe der Ausnehmungen in jeder Platte an die Form und die Größe der mit der Wendevorrichtung zu wendenden Stückgüter angepasst. Entsprechend sind auch in den bekannten Transportvorrichtungen die Abmessungen des Transportkanals fest vorgegeben und auf einen bestimmten Typ von zu verarbeitenden Stückgütern angepasst. Dadurch bedingt können mit einer kombinierten Wende- und Transportvorrichtung immer nur solche Stückgüter verarbeitet werden, welche in ihrer Umrissform und Größe der Form und Größe des Führungskanals der Wendevorrichtung und des Transportkanals der Transportvorrichtung entsprechen. Für die Verarbeitung von Stückgütern mit einer anderen Größe oder einer anderen Umrissform ist die Herstellung einer entsprechend an die Form und Größe dieser anderen Stückgüter angepassten Wende- und Transportvorrichtung erforderlich, d. h. für unterschiedliche Stückgüter in verschiedenen Größen oder Formen müssen verschiedene Wendevorrichtungen und Transportvorrichtungen mit entsprechend angepassten Größen und Formen des Führungs- bzw. Transportkanals bereit gestellt werden. Dies ist kostenaufwendig und verursacht zusätzlichen Aufwand für die Umrüstung der Wende- und Transportvorrichtung.

Hiervon ausgehend liegt der Erfindung die Aufgabe zugrunde, eine Wende- und Transportvorrichtung bereit zu stellen, mit der verschiedene Stückgüter mit unterschiedlichen Größen und Formen verarbeitet werden können. Weiterhin soll ein Verfahren zum Transportieren und Wenden von Stückgütern mit unterschiedlichen Größen und Formen aufgezeigt werden.

Diese Aufgabe wird mit einer Vorrichtung zum Wenden und Transportieren von seriell zugeführtem Stückgut mit den Merkmalen des Anspruchs 1 sowie mit einem Verfahren zum Transportieren und Wenden von Stückgütern mit den Merkmalen des Anspruchs 14 gelöst. Bevorzugte Ausführungsformen der Vorrichtung sind in den abhängigen Ansprüchen aufgezeigt.

Die erfindungsgemäße Vorrichtung umfasst eine Wendeeinrichtung mit einem Führungskanal sowie eine Transporteinrichtung mit einem Transportkanal, wobei sowohl der Führungskanal als auch der Transportkanal an die zu verarbeitenden Stückgüter anpassbar ausgebildet sind. Die Wendeeinrichtung und die Transporteinrichtung sind hierfür zweckmäßig an eine Steuereinrichtung gekoppelt, welche die Einstellung und Anpassung des Führungskanals der Wendevorrichtung und des Transportkanals der Transporteinrichtung steuert. Die Steuereinrichtung ist dabei zweckmäßig so eingerichtet, dass die Form und/oder die Größe des Führungskanals und des Transportkanals gleichzeitig an die Form bzw. Größe der zu verarbeitenden Stückgüter angepasst wird.
Die Wendeeinrichtung der erfindungsgemäßen Vorrichtung umfasst wenigstens zwei Wendeelemente, die den Führungskanal begrenzen und so geformt und zueinander angeordnet sind, dass die Stückgüter beim Durchführen durch den Führungskanal aus ihrer ersten Lage kontinuierlich und über einen vorgegebenen Drehwinkel in die zweite Lage gedreht werden, wobei die Wendeelemente in einer zumindest im Wesentlichen senkrecht zur Transportrichtung stehenden Richtung gegeneinander verschiebbar sind. Durch eine Verschiebung der Wendeelemente relativ zueinander kann die Größe und/oder die Form des Führungskanals verändert und an die zu verarbeitenden Stückgüter sowie an den Führungskanal angepasst werden. Die Form und/oder die Größe des Führungskanals ist dabei zweckmäßig ebenfalls an die zu verarbeitenden Stückgüter anpassbar.

In einem bevorzugten Ausführungsbeispiel sind die Wendeelemente durch wenigstens zwei Blockteile gebildet, welche zu einem Führungsblock zusammengesetzt sind. Der sich aus den wenigstens zwei Wendeelementen zusammensetzende Führungsblock enthält den Führungskanal und weist eine Eingangsöffnung und eine Ausgangsöffnungauf. Der Führungskanal in dem Führungsblock ist dabei so geformt, dass die Stückgüter, welche durch die Eingangsöffnung in den Führungskanal eingeführt und durch diesen bis zur Ausgangsöffnung durchgeführt werden, beim Durchlauf durch den Führungskanal von einer ersten Lage an der Eingangsöffnung in eine zweite Lage an der Ausgangsöffnung gedreht werden. Dies ist bspw. dadurch realisiert, dass in dem Führungskanal in Durchlaufrichtung von der Eingangsöffnung zur Ausgangsöffnung hintereinander angeordnete Hindernisse vorhanden sind, welche jeweils eine zweckmäßig infinitesimale Drehung der durchgeführten Stückgüter beim Durchlaufen durch den Führungskanal bewirken. Die Kraft, mit der die seriell dem Führungsblock zugeführten Stückgüter durch den Führungskanal in einer Durchlaufrichtung gefördert werden, wird durch den Staudruck der Stückgüter erzeugt, die beispielsweise mit einem Förderband dem Führungsblock seriell zugeführt werden. Um die erfindungsgemäße Anpassbarkeit des Führungskanals an die Form und/oder die Größe der zu verarbeitenden Stückgüter zu realisieren, sind die wenigstens zwei Blockteile gegeneinander verschiebbar. Durch eine Verschiebung der Blockteile des Führungsblocks relativ zueinander, kann die Größe und/oder die Form des Führungskanals verändert und an die zu verarbeitenden Stückgüter angepasst werden.

Der Führungsblock kann dabei bspw. aus einem stationären Blockteil und einem beweglichen Blockteil oder aus einem stationären Blockteil und zwei beweglichen Blockteilen zusammen gesetzt sein. Die Blockteile sind dabei in einer zumindest im Wesentlichen senkrecht zur Transportrichtung stehenden Richtung gegeneinander verschiebbar. Bspw. können die Blockteile in einer horizontalen und/oder einer vertikalen Richtung gegeneinander verschiebbar gelagert sein, wobei die horizontale und die vertikalen Richtung zumindest im Wesentlichen senkrecht zur Transportrichtung stehen.

Zweckmäßig sind die Blockteile des Führungsblocks dabei zwischen einer Minimalstellung und einer Maximalstellung stufenlos (kontinuierlich) verschiebbar und in Zwischenstellungen zwischen der Minimal- und der Maximalstellung fixierbar. Dadurch können mit der erfindungsgemäßen Vorrichtung beliebige Stückgüter verarbeitet werden, welche eine Form und Größe aufweisen, die jeweils zwischen der Form und Größe der Eingangs- bzw. Ausgangsöffnung in der Minimalstellung und der Form und Größe der Eingangs- bzw. Ausgangsöffnung in der Maximalstellung liegen. Der Führungsblock kann dabei, wie in der aus dem eingangs beschriebenen Stand der Technik bekannten Wendevorrichtung, durch eine Mehrzahl von hintereinander angeordneten und mit einer Ausnehmung versehenen Platten zusammen gesetzt sein, wobei die Form der Ausnehmungen in den einzelnen Platten im Wesentlichen der Umrisslinie der kleinsten mit der Vorrichtung zu drehenden Stückgüter entspricht und die Ausnehmungen in jeder in Durchlaufrichtung der Stückgüter nachfolgenden Platte gegenüber der vorhergehenden Platte um einen (infinitesimalen) Winkel gedreht angeordnet sind, so dass die in Durchlaufrichtung hintereinander angeordneten Platten einen Führungskanal ausbilden, in dem die Ränder der Ausnehmungen Hindernisse für die durchgeführten Stückgüter bilden, welche beim Durchführen durch den Führungskanal zu einer sukzessiven Drehung der Stückgüter führen.

Um den Widerstand beim Durchführen der Stückgüter durch den Führungskanal zu reduzieren, sind die Ränder der Ausnehmungen in den einzelnen Platten zweckmäßig abgerundet, so dass ein kantenfreier Führungskanal mit einer möglichst glatten Kanalwand in dem Führungsblock ausgebildet ist. Der auf diese Weise durch die Mehrzahl von hintereinander angeordneten Platten gebildete Führungsblock ist bevorzugt in zwei oder mehr Blockteile unterteilt, welche gegeneinander verschiebbar sind. Die Unterteilung des Führungsblocks in zwei oder mehr Blockteile erfolgt dabei entlang von Trennebenen, wobei diese Trennebenen zweckmäßig durch den im Führungsblock ausgebildeten Führungskanal verlaufen.

Alternativ zu der Ausbildung des Führungsblocks durch eine Mehrzahl von hintereinander angeordneten Platten kann der Führungsblock auch durch zwei oder mehr jeweils einstückige Blockteile zusammengesetzt sein. In den einstückigen Blockteilen ist dann jeweils ein Teil des Führungskanals durch Ausbildung von zweckmäßig kantenfreien Ausnehmungen mit einer möglichst glatten Oberfläche ausgebildet. Durch das Zusammensetzen der einzelnen Blockteile zu einem Führungsblock bildet sich der Führungskanal aus den einzelnen Kanalteilen der Blockteile aus. Durch die Verschiebbarkeit der einzelnen Blockteile gegeneinander, ist die Größe und die Form des Führungskanals, einschließlich der Eingangs- und der Ausgangsöffnung, variabel und kann insbesondere zwischen der Minimalstellung und der Maximalstellung an die Größe und Form der zu verarbeitenden Stückgüter angepasst werden.

Zweckmäßig ist der Führungsblock aus wenigstens einem stationären Blockteil und einem oder mehreren beweglichen Blockteilen zusammengesetzt. Der stationäre Blockteil ist dabei bevorzugt an einem stationären Rahmenteil befestigt und der oder jeder bewegliche Blockteil ist gegenüber dem stationären Rahmenteil verschiebbar. Zweckmäßig ist dafür der oder jeder bewegliche Blockteil entlang von an dem stationären Rahmenteil angeordneten Führungselementen, beispielsweise Führungsschienen oder -stäben, verschiebbar.

Zum Verschieben des oder der beweglichen Blockteile gegenüber dem stationären Blockteil ist jeder bewegliche Blockteil zweckmäßig mit einem Antrieb gekoppelt. Bei dem Antrieb kann es sich beispielsweise um einen hydraulischen oder pneumatischen oder auch um einen motorischen Antrieb handeln. Bevorzugt ist ein motorischer Antrieb in Form eines Elektromotors, insbesondere eines Schrittmotors vorgesehen.

In einem Ausführungsbeispiel der Erfindung setzt sich der Führungsblock aus zwei Blockteilen zusammen, nämlich einem stationären Blockteil, der an einem stationären Rahmenteil befestigt ist, und einem beweglichen Blockteil, der gegenüber dem Rahmenteil entlang von Führungselementen in einer horizontalen und / oder einer vertikalen Richtung verschiebbar ist. Die horizontale bzw. vertikale Richtung steht dabei bevorzugt und zumindest im Wesentlichen senkrecht zur Durchlaufrichtung der durch den Führungskanal durchzuführenden Stückgüter.

In einem weiteren Ausführungsbeispiel setzt sich der Führungsblock aus einem stationären Blockteil und zwei beweglichen Blockteilen zusammen, wobei die beweglichen Blockteile gegenüber dem stationären Blockteil in einer vertikalen Richtung verschiebbar und die beiden beweglichen Blockteile gegeneinander in einer horizontalen Richtung verschiebbar sind. Durch die Verschiebbarkeit der beweglichen Blockteile einerseits gegenüber dem stationären Blockteil und andererseits gegenüber dem anderen beweglichen Blockteil kann der (mittlere) Durchmesser des Führungskanals an die Größe der zu verarbeitenden Stückgüter angepasst werden. Unter mittlerer Durchmesser wird dabei der entlang der Transportrichtung gemittelte Durchmesser des Führungskanals verstanden. In diesem Ausführungsbeispiel ist der stationäre Blockteil zweckmäßig an einem stationären Rahmenteil befestigt und die beiden beweglichen Blockteile sind in einem beweglichen Rahmenteil angeordnet, welches gegenüber dem stationären Rahmenteil in einer vertikalen Richtung verschiebbar ist. Die beiden beweglichen Blockteile sind dabei in dem beweglichen Rahmenteil so angeordnet, dass sie gegeneinander entlang einer horizontalen Führung verschiebbar sind. Die Blockteile sind dabei jeweils zwischen einer Minimalstellung, in der sie sich berühren, und einer Maximalstellung, in der sie in einem vorgegebenen Maximalabstand zueinander stehen, kontinuierlich verschiebbar und bevorzugt in jeder Zwischenstellung arretierbar. Auf diese Weise kann die Größe und die Form des Führungskanals der Wendeeinrichtung sowohl an die Höhe als auch an die Breite bzw. den Durchmesser der mit der Vorrichtung zu verarbeitenden Stückgüter angepasst werden.

In entsprechender Weise ist auch der Transportkanal der Transporteinrichtung in der erfindungsgemäßen Vorrichtung an die zu verarbeitenden Stückgüter anpassbar ausgebildet. Der Transportkanal umfasst dabei zweckmäßig wenigstens zwei in einer ersten Richtung im Abstand zueinander angeordnete erste und zweite Führungselemente, welche den Transportkanal begrenzen und gegeneinander verschiebbar sind. Die Führungselemente können bspw. durch mehrere parallel und in einem Abstand zueinander angeordnete Führungsschienen oder -stangen gebildet sein. Auch die Wendeelemente der Wendeeinrichtung können durch Führungsschienen oder -stangen gebildet sein.

Durch relative Verschiebung der ersten und zweiten Führungselemente der Transporteinrichtung gegeneinander kann ihr Abstand zueinander entlang der ersten Richtung und damit die Ausdehnung des Transportkanals längs der ersten Richtung verändert und an die Größe bzw. die Form der Stückgüter angepasst werden. Zweckmäßig umfasst der Transportkanal neben den ersten und den zweiten Führungselementen noch wenigstens ein drittes Führungselement, zweckmäßig in Form einer Führungsstange oder -schiene, welches entlang einer zweiten Richtung, welche senkrecht zur ersten Richtung steht, verschiebbar ist. Zweckmäßig ist das dritte Führungselement um eine Achse drehbar gelagert, wobei die Achse sowohl orthogonal zur ersten Richtung als auch orthogonal zur zweiten Richtung steht. Durch Verschieben, insbesondere Drehen, des dritten Führungselements kann die Größe des Transportkanals längs der zweiten Richtung verändert und an die zu verarbeitenden Stückgüter angepasst werden.

Um die Anpassung des Führungskanals der Wendeeinrichtung und des Transportkanals der Transporteinrichtung automatisch und synchronisiert durchführen zu können, umfasst die Wendeeinrichtung und die Transporteinrichtung bevorzugt jeweils einen Antrieb, bspw. einen Motor, mit dem die Verschiebung der Wendeelemente der Wendeeinrichtung und die Verschiebung der Führungselemente der Transporteinrichtung vorgenommen werden kann. Zur Synchronisierung der Anpassung des Führungskanals der Wendeeinrichtung und des Transportkanals der Transporteinrichtung sind die Antriebe zweckmäßig mit der Steuereinrichtung gekoppelt, welche die Veränderung der Größe des Führungskanals und des Transportkanals steuert und bevorzugt so ausführt, dass bei einer Anpassung des Führungskanals der Wendeeinrichtung an die Form oder Größe der Stückgüter gleichzeitig auch eine entsprechende Anpassung der Größe des Transportkanals erfolgt, und umgekehrt. Auf diese Weise wird bei einem Wechsel der zu verarbeitenden Stückgüter auf andere Stückgüter mit anderer Form und/oder Größe eine zeit- und kostenaufwendige Umrüstung der Vorrichtung entbehrlich.

Diese und weitere Vorteile der Erfindung ergeben sich aus den nachfolgend unter Bezugnahme auf die begleitenden Zeichnungen näher beschriebenen Ausführungsbeispielen. Die Zeichnungen zeigen:
- **Figur 1:**: Darstellung einer erfindungsgemäßen Vorrichtung zum Wenden und Transportieren von seriell zugeführtem Stückgut in einer perspektivischen Ansicht, wobei die Vorrichtung eine erste und eine zweite Wendeeinrichtung sowie eine dazwischen angeordnete Transporteinrichtung aufweist;
- **Figur 2:**: perspektivische Darstellung der ersten Wendeeinrichtung der Vorrichtung von Figur 1, welche sich aus einer ersten und einer zweiten Drehvorrichtung und einer dazwischen angeordneten Transportstrecke zusammen setzt.
- **Figur 3:**: Darstellung der ersten Drehvorrichtung der Wendeeinrichtung von Figur 2 in einer perspektivischen Ansicht von vorne (Figur 3a), sowie einer Ansicht von vorne (Figur 3b) und einer Ansicht von hinten (Figur 3c), wobei die Drehvorrichtung jeweils in einer Maximalstellung eingestellt ist;
- **Figur 4:**: Darstellung der ersten Drehvorrichtung der Wendeeinrichtung von Figur 2 in einer perspektivischen Ansicht von vorne (Figur 4a), sowie einer Ansicht von vorne (Figur 4b) und einer Ansicht von hinten (Figur 4c), wobei die Drehvorrichtung jeweils in einer Minimalstellung eingestellt ist;
- **Figur 5:**: Darstellung der zweiten Drehvorrichtung der Wendeeinrichtung von Figur 2 in einer perspektivischen Ansicht von vorne (Figur 5a), sowie einer Ansicht von vorne (Figur 5b) und einer Ansicht von hinten (Figur 5c), wobei die Drehvorrichtung jeweils in einer mittleren Stellung eingestellt ist;
- **Figur 6:**: Darstellung des Transportkanals der Transporteinrichtung von Figur 1 in einer Ansicht in Transportrichtung, wobei der Transportkanal in einer Minimalstellung eingestellt ist;
- **Figur 7:**: Darstellung des Transportkanals der Transporteinrichtung von Figur 1 in einer Ansicht in Transportrichtung, wobei der Transportkanal in einer Maximalstellung eingestellt ist;

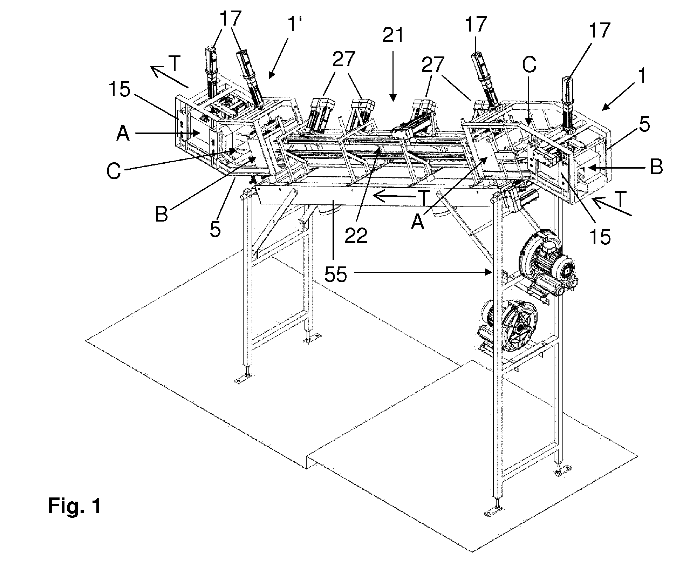

In Figur 1 ist eine erfindungsgemäße Vorrichtung zum Wenden und Transportieren von seriell zugeführtem Stückgut gezeigt. Die Vorrichtung umfasst ein stationäres Gestell 55, an dem eine erste Wendeeinrichtung 1 und eine zweite Wendeeinrichtung 1' sowie eine zwischen der ersten und der zweiten Wendeeinrichtung 1,1' angeordnete Transporteinrichtung 21 befestigt sind. Die mit der Vorrichtung zu bearbeitenden Stückgüter werden der ersten Wendeeinrichtung 1 in Transportrichtung T seriell zugeführt, in dieser von einer ersten Lage in eine zweite Lage gedreht und in der gedrehten Lage an die Transporteinrichtung 21 übergeben. Die Transporteinrichtung 21 transportiert die gedrehten Stückgüter linear längs eines Transportkanals 22 entlang der Transportrichtung T. Der Transportkanal 22 verläuft in dem in Figur 1 gezeigten Ausführungsbeispiel der erfindungsgemäßen Vorrichtung schräg von oben nach unten zu der unterhalb der Transporteinrichtung 21 angeordneten zweiten Wendeeinrichtung 1'. Dadurch wird die Bewegung der Stückgüter längs des Transportkanals 22 einerseits durch den Staudruck der nachfolgenden (stromaufwärtigen) Stückgüter und andererseits durch die Schwerkraft unterstützt. Optional kann die Transporteinrichtung 21 ein Förderband oder einen anderen Förderantrieb umfassen, um die Bewegung der Stückgüter längs des Transportkanals 22 zu unterstützen. Die zweite Wendeeinrichtung 1' dreht die vom Transportkanal 22 in ihrer zweiten Lage übernommenen Stückgüter zurück in ihre erste Lage.

Die in Figur 1 gezeigte Vorrichtung zum Wenden und Transportieren von Stückgütern kann beispielsweise in einer Reinigungsvorrichtung zur Reinigung von Behältern (insbesondere von Dosen oder Gläser) zum Verpacken von Lebensmitteln eingesetzt werden. Die Stückgüter in Form der Verpackungsbehälter werden dabei in der ersten Wendeeinrichtung 1 zunächst von einer horizontalen ersten Lage in eine Kopfüber-Lage gedreht, beispielweise in eine 135°- oder 180°-Lage, in dieser gedrehten zweiten Lage an die Transporteinrichtung 21 übergeben und von dieser längs des Transportkanals 22 linear weitertransportiert, wobei während des linearen Weitertransports der Stückgüter in ihrer zweiten (gedrehten) Lage eine Reinigungsflüssigkeit von unten in die Öffnung der Verpackungsbehälter eingesprüht wird, um diese zu reinigen. Die sich in Transportrichtung T an die Transporteinrichtung 21 anschließende zweite Wendeeinrichtung 1' dreht die Verpackungsbehälter dann wieder zurück in ihre erste Lage.

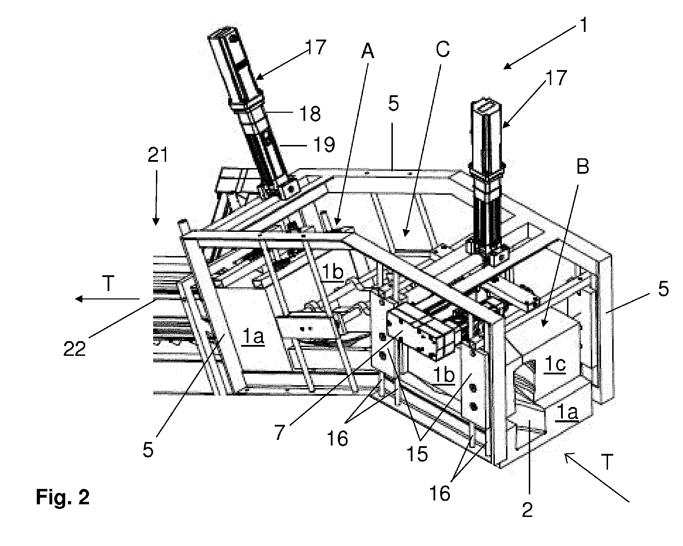

In Figur 2 ist die erste Wendeeinrichtung 1 im Detail dargestellt. Die zweite Wendeeinrichtung 1' ist entsprechend der ersten Wendeeinrichtung 1 aufgebaut. Die Wendeeinrichtungen 1, 1' setzen sich jeweils aus einer ersten Drehvorrichtung A und einer zweiten Drehvorrichtung B zusammen. Zwischen der ersten Drehvorrichtung A und der zweiten Drehvorrichtung B ist dabei jeweils eine Transportstrecke C angeordnet, in der die in der einen Drehvorrichtung A oder B gedrehten Stückgüter zur anderen Drehvorrichtung B oder A weitertransportiert werden. In der in Transportrichtung T nachfolgenden Drehvorrichtung A bzw. B werden die bereits in der ersten Drehvorrichtung B bzw. A um einen vorgegebenen Drehwinkel gedrehten Stückgüter weitergedreht. In dem in Figur 2 gezeigten Ausführungsbeispiel werden die Stückgüter zunächst in der zweiten Drehvorrichtung B der ersten Wendeeinrichtung 1 aus einer vertikalen Lage um 90° in eine horizontale Lage und danach in der ersten Drehvorrichtung A um 45° weiter gedreht, also insgesamt um 135° in Uhrzeigerrichtung (in Transportrichtung T betrachtet). In dieser gedrehten Lage passieren die Stückgüter den Transportkanal 22 und werden schließlich in der zweiten Wendeeinrichtung 1' um einen Drehwinkel von 135° entgegen der Uhrzeigerrichtung in ihre vertikale Lage zurück gedreht.

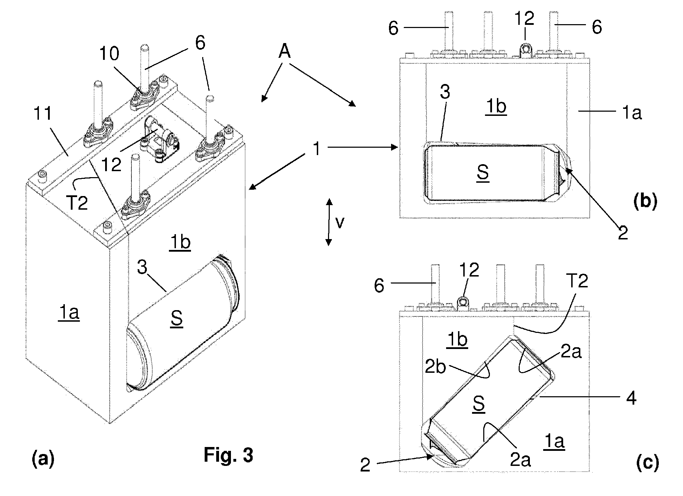

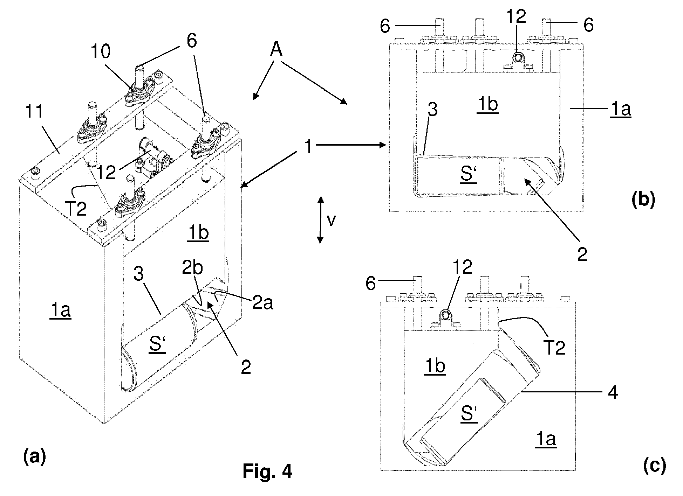

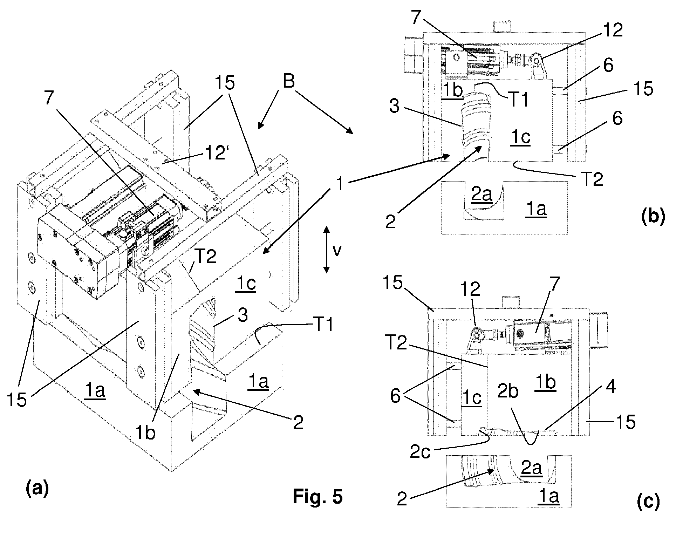

Die in Figur 2 gezeigte Wendeeinrichtung 1 umfasst ein stationäres Rahmenteil 5, welches an dem stationären Gestell 55 der in Figur 1 gezeigten erfindungsgemäßen Vorrichtung befestigt ist. An dem stationären Rahmenteil 5 sind die erste Drehvorrichtung A und die zweite Drehvorrichtung B angeordnet. Der Aufbau der Drehvorrichtungen A und B ist in den Figuren 3 und 4 (Drehvorrichtung A) und in Figur 5 (Drehvorrichtung B) im Detail dargestellt und wird im Folgenden erläutert:

In den Figuren 3 und 4 ist die Drehvorrichtung A der Wendeeinrichtung 1 zum Wenden von seriell zugeführtem Stückgut gezeigt. Diese Drehvorrichtung A dient zum Wenden von Stückgut S, beispielsweise von zylindrischen Dosen oder Gläsern oder quaderförmigen Verpackungen aus Pappe, um einen vorgegebenen Drehwinkel von 45°. Die Drehvorrichtung A umfasst hierfür einen Führungsblock 1, der sich aus einem ersten Blockteil 1a und einem zweiten Blockteil 1b zusammen setzt. Der Führungsblock 1 ist dabei längs einer Trennebene T2 in die beiden Blockteile 1a und 1b unterteilt. Die beiden Blockteile 1a, 1b sind zweckmäßig aus Kunststoff, beispielsweise aus POM oder PP und können jeweils einstückig ausgebildet und beispielsweise durch Spritzguss gefertigt oder durch eine Mehrzahl von hintereinander angeordneten Platten zusammengesetzt sein. Die Blockteile 1a, 1b können jedoch auch aus einem anderen Material, wie z.B. Metall oder Holz gefertigt sein.

In dem durch die beiden Blockteile 1a, 1b gebildeten Führungsblock 1 ist ein Führungskanal 2 mit einer Eingangsöffnung 3 (Figur 3b) und einer Ausgangsöffnung 4 (Figur 3c) ausgeformt, wobei die Lage der Eingangsöffnung 3 gegenüber der Lage der Ausgangsöffnung 4 in dem hier gezeigten Ausführungsbeispiel um 45° (bei Blick in Durchlaufrichtung in Uhrzeigerrichtung) gedreht ist. Der Führungskanal 2 ist einerseits von den Wandungen 2a einer Ausnehmung in dem stationären Blockteil 1a und andererseits von einer Wandung 2b des beweglichen Blockteils 1b begrenzt und weißt zweckmäßig eine kantenfreie, glatte Oberfläche auf, welche so ausgeformt ist, dass ein durch den Führungskanal 2 geführtes Stückgut sukzessive ausgehend von einer ersten Lage an der Eingangsöffnung 3 in eine zweite Lage an der Ausgangsöffnung 4 gedreht wird. In dem in Figur 3 zeichnerisch dargestellten Ausführungsbeispiel werden die zu wendenden Stückgüter S dem Führungsblock 1 in einer horizontalen ersten Lage durch die Eingangsöffnung 3 in den Führungskanal 2 eingeführt und dort kontinuierlich gedreht, bis sie den Führungsblock 1 an der in Figur 3c gezeigten Ausgangsöffnung 4 in einer zweiten Lage verlassen, welche gegenüber der ersten Lage um 45° gedreht ist. In Durchlaufrichtung betrachtet, welche von der Eingangsöffnung 3 zur Ausgangsöffnung 4 verläuft, werden die Stückgüter beim Durchlauf durch den Führungskanal 2 um 45° in Uhrzeigerrichtung gedreht.

Zur Anpassung der Form und Größe des Führungskanals 2, einschließlich der Eingangsöffnung 3 und der Ausgangsöffnung 4, setzt sich der Führungsblock 1 aus einem stationären Blockteil 1a und einem beweglichen Blockteil 1b zusammen, wobei der bewegliche Blockteil 1b gegenüber dem stationären Blockteil 1a in einer vertikalen Richtung V zwischen einer Minimalstellung und einer Maximalstellung verschiebbar ist. Der stationäre Blockteil 1a des Führungsblock 1 ist hierfür an einem - in Figur 3 nicht gezeigten - stationären Rahmenteil 5 befestigt und der bewegliche Blockteil 1b ist gegenüber dem stationären Rahmenteil 5 und damit gegenüber dem stationären Blockteil 1a verschiebbar. In den Figuren 3a bis 3c ist der bewegliche Blockteil 1b in seiner Maximalstellung gezeigt, in welcher der Führungskanal 2 sowie die Eingangsöffnung 3 und die Ausgangsöffnung 4 jeweils eine maximale Größe aufweist. In Figur 4 ist die Drehvorrichtung A in ihrer Minimalstellung gezeigt, in welcher der Führungskanal 2 sowie die Eingangsöffnung 3 und die Ausgangsöffnung 4 jeweils eine minimale Größe aufweisen. Die Drehvorrichtung A kann stufenlos zwischen der Minimalstellung der Figur 4 und der Maximalstellung der Figur 3 verstellt und dadurch an die zu verarbeitenden Stückgüter S angepasst werden.

Zum Verschieben des beweglichen Blockteils 1b ist dieser an Führungselementen 6 verschiebbar gelagert. In dem in Figur 3 gezeigten Ausführungsbeispiel sind die Führungselemente 6 durch Führungsstangen gebildet, welche an dem beweglichen Blockteil 1b befestigt sind und durch Führungsöffnungen 10 in Führungsschienen 11 durchgreifen. Die Führungsschienen 11 sind am stationären Blockteil 1a befestigt. Zweckmäßig ist der bewegliche Blockteil 1b an einen in Figur 3 nicht dargestellten Antrieb 17, beispielsweise einem motorischen, hydraulischen oder pneumatischen Antrieb, gekoppelt. Über den Antrieb 17 kann der bewegliche Blockteil 1b entlang der Führungselemente 6 gegenüber dem stationären Blockteil 1a verschoben werden. Zur Ankopplung des beweglichen Blockteils 1b an den Antrieb 17 ist ein Kopplungselement 12 am beweglichen Blockteil 1b befestigt.

In Figur 5 ist die zweite Drehvorrichtung B der Wendeeinrichtung 1 gezeigt, wobei die Darstellung der Figur 5 die Drehvorrichtung B ohne Stückgut und in einer Zwischenstellung zeigt. Die zweite Drehvorrichtung B dient zum Drehen der Stückgüter S um einen vorgegebenen Drehwinkel von 90°. Wie die erste Drehvorrichtung A umfasst auch die zweite Drehvorrichtung B einen Führungsblock 1 mit einem darin ausgeformten Führungskanal 2, der eine Eingangsöffnung 3 und eine Ausgangsöffnung 4 aufweist. Die Stückgüter S werden dem Führungsblock 1 in einer ersten, vertikalen Lage zugeführt und durch die Eingangsöffnung 3 in den Führungsblock 1 eingeführt, wo sie den Führungskanal 2 durchlaufen und ihn an der Ausgangsöffnung 4 in einer zweiten, horizontalen Lage verlassen.

Der Führungsblock 1 ist bei der zweiten Drehvorrichtung B aus drei Blockteilen 1a, 1b und 1c zusammengesetzt, wobei es sich bei dem Blockteil 1a um einen stationären Blockteil und bei den Blockteilen 1b und 1c um bewegliche Blockteile handelt. Der stationäre Blockteil 1a ist an einem - in Figur 5 nicht dargestellten - stationären Rahmenteil 5 befestigt. Die beiden beweglichen Blockteile 1b, 1c sind an einem gegenüber dem stationären Rahmenteil 5 beweglichen Rahmenteil 15 angeordnet. Der bewegliche Rahmenteil 15 ist dabei gegenüber dem stationären Rahmenteil 5 in einer vertikalen Richtung V verschiebbar.

Bei der zweiten Drehvorrichtung B ist ein erster Teil 2a des Führungskanals 2 in dem stationären Blockteil 1a und ein zweiter Teil 2b sowie ein dritter Teil 2c des Führungskanals 2 sind in den beiden beweglichen Blockteilen 1b bzw. 1c ausgeformt. Der erste Teil 2a bildet zusammen mit zweiten Teil 2b sowie dem dritten Teil 2c den Führungskanal 2 aus.

Die beiden beweglichen Blockteile 1b, 1c sind an dem in vertikaler Richtung V beweglichen Rahmenteil 15 angeordnet, wobei der erste bewegliche Blockteil 1b an dem beweglichen Rahmenteil 15 fixiert ist und der zweite bewegliche Blockteil 1c verschiebbar in dem beweglichen Rahmenteil 15 angeordnet ist. Hierfür sind an dem beweglichen Rahmenteil 15 Führungselemente 6 befestigt. Entlang dieser Führungselemente 6 kann der zweite bewegliche Blockteil 1c gegenüber dem ersten beweglichen Blockteil 1b verschoben werden. Bei den Führungselementen 6 kann es sich beispielsweise um Führungsschienen oder Führungsstangen handeln, welche am beweglichen Rahmenteil 15 befestigt sind. Zum Verschieben des zweiten beweglichen Blockteils 1c gegenüber dem ersten beweglichen Blockteil 1b ist der zweite bewegliche Blockteil 1c mit einem Antrieb 7 gekoppelt. Zweckmäßig handelt es sich bei dem Antrieb 7 um einen Schrittmotor, welcher über ein Kopplungselement 12 mit dem zweiten beweglichen Blockteil 1c verbunden ist.

Der Führungsblock 1 ist durch zwei Trennebenen T1, T2 in die drei Blockteile 1a, 1b, 1c unterteilt, wobei die Trennebenen durch den Führungskanal 2 verlaufen und die erste Trennebene T1 horizontal verläuft und die zweite Trennebene T2 senkrecht auf der ersten Trennebene T1 steht.

In den Figuren 5a bis 5c ist die Drehvorrichtung in einer Zwischenstellung gezeigt, in welcher der zweite bewegliche Blockteil 1c am ersten beweglichen Blockteil 1b anliegt und der stationäre Blockteil 1a in einem maximalen vertikalen Abstand zu den beweglichen Blockteilen 1b, 1c steht. Die Drehvorrichtung B kann zwischen einer Minimalstellung, in welcher sowohl der zweite bewegliche Blockteil 1c am ersten beweglichen Blockteil 1b anliegt als auch der stationäre Blockteil 1a an den beiden beweglichen Blockteilen 1b, 1c anliegt, und einer Maximalstellung, in welcher der zweite bewegliche Blockteil 1c in einem maximalen horizontalen Abstand zum ersten beweglichen Blockteil 1b und der stationäre Blockteil 1a in einem maximalen vertikalen Abstand zu den beweglichen Blockteilen 1b, 1c steht, stufenlos verstellt und dadurch an die zu verarbeitenden Stückgüter S angepasst werden. In der Minimalstellung weist der Führungskanal 2 (einschl. der Eingangsöffnung 3 und der Ausgangsöffnung 4) dabei eine minimale Größe (d.h. minimalen Durchmesser und minimale Höhe) auf und in der Maximalstellung weist der Führungskanal 2 eine maximale Größe (d.h. maximalen Durchmesser und maximale Höhe) auf.

In Figur 2 ist die erste Wendeeinrichtung 1 gezeigt, welche sich aus einer Drehvorrichtung A (Figuren 3 und 4) und einer Drehvorrichtung B (Figur 5) zusammen setzt, wobei zwischen der ersten Drehvorrichtung A und der zweiten Drehvorrichtung B eine Transportstrecke C angeordnet ist. Entlang der Transportstrecke C werden die Stückgüter, welche die Drehvorrichtung A an der Ausgangsöffnung 4 verlassen, zur Eingangsöffnung 3 der Drehvorrichtung B transportiert. Die Transportstrecke C umfasst hierfür Führungen, auf denen die Stückgüter aufliegen und - angetrieben vom Staudruck der nachfolgenden Stückgüter - ohne Drehung weiter transportiert werden. Zur Unterstützung der durch den Staudruck hervorgerufenen Transportkraft in Transportrichtung T kann optional in der Transportstrecke C ein Förderband vorgesehen sein, welches einen angetriebenen Riemen aufweist, auf dem die Stückgüter transportiert werden.

Die Wendeeinrichtung von Figur 2 weist einen stationären Rahmenteil 5 auf, der an dem Gestell 55 der Vorrichtung von Figur 1 befestigt ist und an dem die erste Drehvorrichtung A und die zweite Drehvorrichtung B angeordnet sind. Dabei ist der stationäre Blockteil 1a der ersten Drehvorrichtung A an dem stationären Rahmenteil 5 befestigt und der bewegliche Rahmenteil 15 der Drehvorrichtung B ist verschiebbar an dem stationären Rahmenteil 5 angeordnet. Hierfür sind Führungselemente 16, bspw. vertikal stehende Führungsstangen, am stationären Rahmenteil 5 befestigt und der bewegliche Rahmenteil 15 der Drehvorrichtung B ist an den Führungselementen 16 verschiebbar gelagert. Weiterhin sind Vertikalantriebe 17 vorgesehen, mit denen der bewegliche Blockteil 1b der Drehvorrichtung A und der bewegliche Rahmenteil 15 der Drehvorrichtung B in vertikaler Richtung V gegenüber dem stationären Blockteil 1a der jeweiligen Drehvorrichtungen A bzw. B verschiebbar sind. Bei diesen Vertikalantrieben 17 handelt es sich zweckmäßig um Schrittmotoren, welche über eine Kupplung 18 und einem Linearzylinder 19 und über Kopplungselemente 12 mit dem beweglichen Blockteil 1b bzw. dem beweglichen Rahmenteil 15 verbunden sind.

Mit der Wendeeinrichtung 1 von Figur 2 können Stückgüter nacheinander zuerst mittels der zweiten Drehvorrichtung B um 90° und anschließend mittels der ersten Drehvorrichtung A um 45° und somit um einen Gesamt-Drehwinkel von 135° gedreht werden.

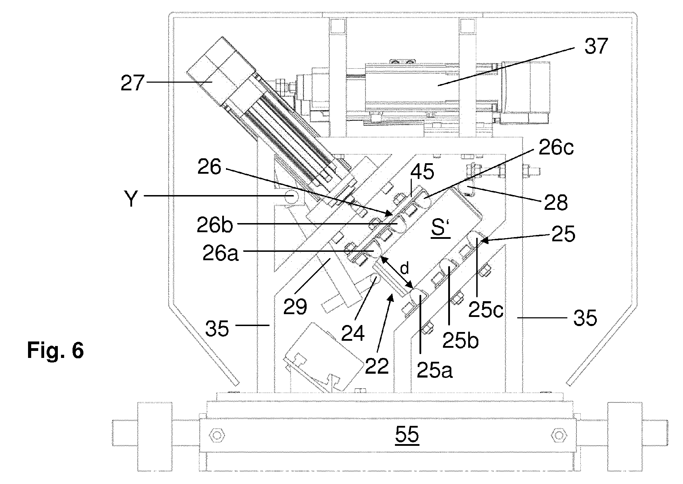

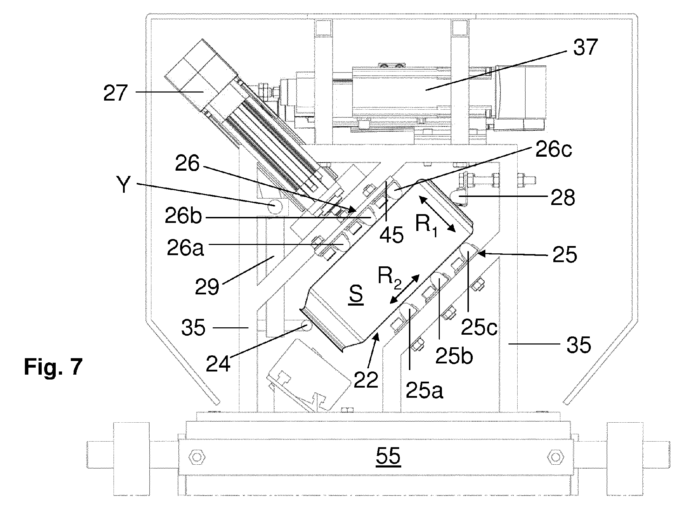

In den Figuren 6 und 7 ist die Transporteinrichtung 21 mit dem Transportkanal 22 im Detail jeweils in einer Ansicht in Transportrichtung dargestellt, wobei die Transporteinrichtung 21 in Figur 6 in einer Minimalstellung und in Figur 7 in einer Maximalstellung gezeigt ist.

Die Transporteinrichtung 21 umfasst ein stationäres Rahmenteil 35, das an dem Gestell 55 der Vorrichtung von Figur 1 befestigt ist. Weiterhin umfasst die Transporteinrichtung 21 erste Führungselemente 25 und zweite Führungselemente 26, welche in einer ersten Richtung R1 im Abstand zueinander angeordnet sind. Die ersten Führungselemente 25 sind in dem in den Figuren 6 und 7 gezeigten Ausführungsbeispiel durch drei parallel zueinander und längs der Transportrichtung T verlaufende Führungsstangen 25a, 25b, 25c gebildet. Auch die zweiten Führungselemente 26 sind in diesem Ausführungsbeispiel durch drei parallel zu den Führungsstangen der ersten Führungselemente 25 verlaufende Führungsstangen 26a, 26b, 26b gebildet, welche an einem beweglichen Rahmenteil 45 befestigt sind. Zwischen den ersten Führungselementen 25 und den zweiten Führungselementen 26 verläuft der Führungskanal 22, welcher damit durch die ersten und zweiten Führungselemente 25, 26 begrenzt ist und sich längs der in die Papierebene der Figuren 6 und 7 zeigende Transportrichtung T erstreckt.

Um die Ausdehnung des Transportkanals 22 in der ersten Richtung R1 an die Größe und/oder der Form der zu verarbeitenden Stückgüter S anpassen zu können, ist der lichte Abstand d zwischen den ersten Führungselementen 25 und den zweiten Führungselementen 26 einstellbar. Hierfür sind die ersten Führungselemente 25 und die zweiten Führungselemente 26 relativ zueinander entlang der ersten Richtung R1 verschiebbar. Für eine automatische Anpassung des lichten Abstands d zwischen den ersten Führungselementen 25 und den zweiten Führungselementen 26 ist der bewegliche Rahmenteil 45 der zweiten Führungselemente 26 mit einem Antrieb 27 gekoppelt. Über den Antrieb 27, der beispielsweise als Elektromotor, insbesondere als Schrittmotor ausgebildet sein kann, können die am beweglichen Rahmenteil 45 befestigten zweiten Führungselemente 26 gegenüber den fest mit dem stationären Rahmenteil 35 verbundenen ersten Führungselementen 25 in der ersten Richtung R1 maschinell zwischen einer Minimalstellung und einer Maximalstellung verschoben werden. Dadurch kann die Ausdehnung des Transportkanals 22 in der ersten Richtung R1 zwischen einer Minimalstellung und einer Maximalstellung eingestellt und an die Größe und/oder die Form der zu verarbeitenden Stückgüter angepasst werden.

Die Transporteinrichtung 21 umfasst zweckmäßig weitere Führungselemente 24, 28, welche den Transportkanal 22 ober- und unterseitig begrenzen. Das in den Figuren 6 und 7 gezeigte obere Führungselement 28 ist dabei fest mit dem stationären Rahmenteil 35 verbunden und das untere Führungselement 24 ist gegenüber dem stationären Rahmenteil 35 beweglich. Hierfür ist das untere Führungselement 24 über einen Hebel 29 um eine Verschwenkachse Y verschwenkbar an dem stationären Rahmenteil 35 angelenkt. Zum Verschwenken des unteren Führungselements 24 um die Verschwenkachse Y ist das untere Führungselement 24 am Hebel 29 befestigt und dieser ist mit einem Antrieb 37 gekoppelt. Mittels des Antriebs 37, der beispielsweise als Elektromotor oder auch als hydraulischer oder pneumatischer Antrieb ausgebildet sein kann, ist das untere Führungselement 24 zwischen der in Figur 6 gezeigten Minimalstellung und der in Figur 7 gezeigten Maximalstellung verschwenkbar. In der Minimalstellung (Figur 6) ragt das untere Führungselement 24 von unten in den Führungskanal 22 hinein und begrenzt den Führungskanal 22 dadurch bodenseitig in einer zweiten Richtung R2, welche zur ersten Richtung R1 senkrecht steht. Der Transportkanal 22 erstreckt sich in der zweiten Richtung R2 damit zwischen dem (beweglichen) unteren Führungselement 24 und dem (stationären) oberen Führungselement 28.

In der in Figur 6 gezeigten Minimalstellung der Transporteinrichtung 21 ist die Größe des Transportkanals 22 an kleinere Stückgüter S' (mit einer minimalen Größe) angepasst, indem einerseits die zweiten Führungselemente 26 in einem minimalen Abstand in erster Richtung R1 zu den ersten Führungselementen 25 eingestellt sind und indem andererseits das untere Führungselement 24 bodenseitig in den Transportkanal 22 eingeschwenkt ist und in Bezug auf das stationäre obere Führungselement 28 entlang der zweiten Richtung R2 einen minimalen Abstand einnimmt. Der Transportkanal 22 wird dadurch einerseits durch die im Abstand d zueinander längs der ersten Richtung R1 angeordneten ersten und zweiten Führungselemente 25, 26 und andererseits durch den Abstand der unteren und oberen Führungselemente 24, 28 entlang der zweiten Richtung R2 definiert.

In Figur 7 ist die Transporteinrichtung 21 in ihrer Maximalstellung gezeigt, in der die ersten und zweiten Führungselemente 25, 26 in der ersten Richtung R1 einen maximalen Abstand zueinander aufweisen und das untere Führungselement 24 aus dem Transportkanal 22 ausgeschwenkt ist. Auch in dieser Maximalstellung der Transporteinrichtung 21 wird der Transportkanal 22 einerseits durch den Abstand der ersten und zweiten Führungselemente 25, 26 und andererseits durch den Abstand des (ausgeschwenkten) unteren Führungselements 24 zum (festen) oberen Führungselement 28 definiert. Die Maximalstellung der Transporteinrichtung 21 gemäß Figur 7 dient zum Transport von größeren Stückgütern S, welche gegenüber den in Figur 6 gezeigten kleineren Stückgütern S' einen größeren Durchmesser und eine größere Höhe aufweisen.

Zur gleichzeitigen und synchronen Anpassung des Führungskanals 2 der Wendeeinrichtungen 1, 1' und des Transportkanals 22 der Transporteinrichtung 21 werden die Antriebe 7, 17, 27, 37 zweckmäßig von einer zentralen Steuereinrichtung gesteuert. Die zentrale Steuereinrichtung ist bevorzugt so eingerichtet, dass sie die Größe des Führungskanals 2 der Wendeeinrichtungen 1, 1' und die Größe des Transportkanals 22 der Transporteinrichtung 21 gleichzeitig an die Größe der momentan zu verarbeitenden Stückgüter S anpasst. Die Anpassung des Führungskanals 2 der Wendeeinrichtungen 1, 1' und des Transportkanals 22 der Transporteinrichtung 21 erfolgt dabei in der oben beschriebenen Weise über die dafür vorgesehenen Antriebe 7, 17, 27, 37. Dadurch ist die erfindungsgemäße Vorrichtung in der Lage, ohne eine Umrüstung unterschiedliche Stückgüter mit verschiedenen Abmessungen (bspw. verschiedene Durchmesser und Höhen von zylindrischen Dosen oder Flaschen) und/oder verschiedenen Umrissformen zu verarbeiten.

Die Erfindung ist nicht auf die hier zeichnerisch dargestellten und oben beschriebenen Ausführungsformen beschränkt. Insbesondere sind die vorgegebenen Drehwinkel der Drehvorrichtungen A und B bzw. der beiden Dreheinrichtungen 1 und 1' nicht auf die hier beispielhaft angegebenen Werte beschränkt. Je nach Länge des Führungskanals 2 der Drehvorrichtungen A, B kann jeder beliebige Drehwinkel realisiert werden. Weiterhin ist die Erfindung nicht auf die Unterteilung der Führungsblöcke 1 der Drehvorrichtungen A, B in zwei oder drei Blockteile beschränkt, sondern es können noch weitere Unterteilungen vorgesehen sein. Durch weitere Unterteilungen der Führungsblöcke 1 in mehr als drei Blockteile lässt sich nicht nur eine Anpassung der Größe des Führungskanals 2 an die Höhe und die Breite bzw. den Durchmesser der zu verarbeitenden Stückgüter S vornehmen, sondern auch an besondere Formen der Stückgüter. Die Ausbildung der Transporteinrichtung 21 ist ebenfalls nicht auf das zeichnerisch dargestellte Ausführungsbeispiel beschränkt. Insbesondere können die Führungselemente 24, 25, 26, 28 auch durch andere Bauteile als Stangen oder Schienen gebildet sein, bspw. durch Führungsplatten. Weiterhin ist nicht zwingend, dass der Transportkanal 22 linear verläuft. Ferner ist die Anzahl der in der erfindungsgemäßen Vorrichtung verwendeten Wendeeinrichtungen nicht auf die im Ausführungsbeispiel beschriebenen zwei Wendeeinrichtungen 1,1' beschränkt.

## Patentansprüche

1. Vorrichtung zum Transportieren und Wenden von Stückgut, mit wenigstens einer Wendeeinrichtung (1) mit einem Führungskanal (2), in welchem die seriell zugeführten Stückgüter in einer ersten Lage eingeführt und unter Veränderung ihrer Lage in einer Transportrichtung (T) durchgeführt werden, und mit einer sich in Transportrichtung (T) an die Wendeeinrichtung (1) anschließenden Transporteinrichtung (21) mit einem Transportkanal (22), in dem die Stückgüter in ihrer zweiten Lage linear weiter transportiert werden, wobei die Form und/oder der Durchmesser des Führungskanals (2) sowie die Form und/oder der Durchmesser des Transportkanals (22) aneinander anpassbar sind, **dadurch gekennzeichnet, dass** die Wendeeinrichtung (1) wenigstens zwei Wendeelemente (1a, 1b, 1c) umfasst, die den Führungskanal (2) begrenzen und so geformt sind, dass die Stückgüter beim Durchführen durch den Führungskanal (2) aus ihrer ersten Lage kontinuierlich und über einen vorgegebenen Drehwinkel in die zweite Lage gedreht werden, wobei die Wendeelemente (1a, 1b) in einer zumindest im Wesentlichen senkrecht zur Transportrichtung (T) stehenden Richtung gegeneinander verschiebbar sind.

2. Vorrichtung nach Anspruch 1, **gekennzeichnet durch** eine Steuereinrichtung, welche mit der Wendeeinrichtung (1) und mit der Transporteinrichtung (21) gekoppelt ist.

3. Vorrichtung nach Anspruch 1 oder 2, **dadurch gekennzeichnet, dass** die Wendeeinrichtung (1) wenigstens einen ersten Antrieb (7, 17) zur Anpassung des Führungskanals (2) und insbesondere zum Verschieben der Wendeelemente (1a, 1b, 1c) relativ zueinander umfasst, und dass die Transporteinrichtung (21) wenigstens einen zweiten Antrieb (27, 37) zur Anpassung des Transportkanals (2) umfasst.

4. Vorrichtung nach Anspruch 2 oder 3, wobei die Steuereinrichtung so eingerichtet ist, dass sie die Form und/oder den Durchmesser des Führungskanals (2) und insbesondere den Abstand der Wendeelemente (1a, 1b, 1c) zueinander in einer zumindest im Wesentlichen senkrecht zur Transportrichtung (T) stehenden Richtung an die Form und/oder den Durchmesser des Transportkanals (22) anpasst, oder umgekehrt.

5. Vorrichtung nach einem der voranstehenden Ansprüche, **dadurch gekennzeichnet, dass** die Form und/oder der Durchmesser des Führungskanals (2) durch Verschieben der Wendeelemente (1a, 1b, 1c) relativ zueinander an die Form und/oder den Durchmesser des Transportkanals (21) sowie an die Form und/oder die Größe der Stückgüter anpassbar ist.

6. Vorrichtung nach einem der voranstehenden Ansprüche, **dadurch gekennzeichnet, dass** die Wendeeinrichtung (1) einen Führungsblock (1) umfasst, in dem der Führungskanal (2) ausgebildet ist, welcher so geformt ist, dass die Stückgüter beim Durchführen durch den Führungskanal (2) aus ihrer ersten Lage kontinuierlich und über einen vorgegebenen Drehwinkel in die zweite Lage gedreht werden, wobei der Führungsblock (1) aus wenigstens zwei Blockteilen (1a, 1b, 1c) zusammen gesetzt ist, welche die Wendeelemente bilden und gegeneinander verschiebbar sind.

7. Vorrichtung nach Anspruch 6, wobei der (mittlere) Durchmesser und/oder die Höhe des Führungskanals (2) der Wendeeinrichtung (1) durch Verschieben wenigstens eines Blockteils (1a, 1b, 1c) veränderbar und insbesondere an die Form und die Größe des Stückguts anpassbar ist.

8. Vorrichtung nach einem der Ansprüche 6 oder 7, **dadurch gekennzeichnet, dass** der Führungsblock (1) aus wenigstens einem stationären Blockteil (1a) und einem beweglichen Blockteil (1b), zusammen gesetzt ist.

9. Vorrichtung nach Anspruch 8, **dadurch gekennzeichnet, dass** der stationäre Blockteil (1a) an einem stationären Rahmenteil (5) befestigt und der bewegliche Blockteil (1b) insbesondere über Führungen (6) an dem stationären Rahmenteil (5) gelagert und gegenüber dem stationären Blockteil (1a) verschiebbar ist, wobei der bewegliche Blockteil (1b) bevorzugt mit einem Antrieb (7, 17), insbesondere einem motorischen, hydraulischen oder pneumatischen Antrieb, gekoppelt ist.

10. Vorrichtung nach einem der voranstehenden Ansprüche, **dadurch gekennzeichnet, dass** die Wendeelemente (1a, 1b, 1c) in einer horizontalen und/oder einer vertikalen Richtung gegeneinander verschiebbar sind, wobei die horizontale und die vertikalen Richtung zumindest im Wesentlichen senkrecht zur Transportrichtung (T) stehen.

11. Vorrichtung nach einem der voranstehenden Ansprüche, **dadurch gekennzeichnet, dass** die Transporteinrichtung (21) eine Mehrzahl von Führungselementen (24, 25, 26), insbesondere mehrere parallel zueinander und in Transportrichtung verlaufende Führungsstangen oder -schienen, umfasst, wobei wenigstens ein Führungselement (24) um eine Verschwenkachse (Y) verschwenkbar ist.

12. Vorrichtung nach einem der voranstehenden Ansprüche, **dadurch gekennzeichnet, dass** die Transporteinrichtung (21) erste Führungselemente (25) und zweite Führungselemente (26) umfasst, welche parallel und längs einer ersten Richtung (R1) in einem einstellbaren Abstand (d) zueinander verlaufen und den Transportkanal (22) begrenzen, wobei der Abstand (d) zwischen den ersten Führungselementen (25) und den zweiten Führungselementen (26) zur Anpassung des Durchmessers des Transportkanals (22) insbesondere mittels eines Antriebs (27) einstellbar ist.

13. Vorrichtung nach Anspruch 9, **dadurch gekennzeichnet, dass** die ersten Führungselemente (25) an einem stationären Rahmenteil (35) und die zweiten Führungselemente (26) an einem beweglichen Rahmenteil (45) befestigt sind, wobei der bewegliche Rahmenteil (45) gegenüber dem stationären Rahmenteil (35), insbesondere mittels eines Antriebs (27), verschiebbar ist.

14. Verfahren zum Transportieren und Wenden von Stückgut, wobei die Stückgüter seriell einer Wendeeinrichtung (1) mit einem Führungskanal (2) in einer ersten Lage zugeführt und in einer Transportrichtung (T) durch den Führungskanal (2) unter Veränderung ihrer Lage durchgeführt und danach in einer sich in Transportrichtung (T) an die Wendeeinrichtung (1) anschließenden Transporteinrichtung (21) mit einem Transportkanal (22) in ihrer zweiten Lage linear weiter transportiert werden, wobei die Form und/oder der Durchmesser des Führungskanals (2) sowie die Form und/oder der Durchmesser des Transportkanals (22) aneinander anpassbar sind, **dadurch gekennzeichnet, dass** die Wendeeinrichtung (1) wenigstens zwei Wendeelemente (1a, 1b, 1c) umfasst, die den Führungskanal (2) begrenzen und so geformt sind, dass die Stückgüter beim Durchführen durch den Führungskanal (2) aus ihrer ersten Lage kontinuierlich und über einen vorgegebenen Drehwinkel in die zweite Lage gedreht werden, wobei die Wendeelemente (1a, 1b, 1c) in einer zumindest im Wesentlichen senkrecht zur Transportrichtung (T) stehenden Richtung gegeneinander verschoben werden, um die Form und/oder den Durchmesser des Führungskanals (2) an die Form und/oder den Durchmesser des Transportkanals (22) anzupassen.
